# EUROPÄISCHE PATENTSCHRIFT

(11) **EP 3 772 796 B1**
(45) Veröffentlichungstag und Bekanntmachung des Hinweises auf die Patenterteilung: **23.10.2024**
(21) Anmeldenummer: 20188601.7
(22) Anmeldetag: 30.07.2020
(51) Int. Cl.: H02J 13/00, H02B 1/20, H02B 1/50, H02G 5/02, H02B 13/035

(54) **SAMMELSCHIENENHALTER UND INSTALLATIONSVERTEILER**
BUSBAR HOLDER AND INSTALLATION DISTRIBUTOR
SUPPORTS DE BARRES OMNIBUS ET TABLEAUX DE RÉPARTITION

(30) Priorität: 06.08.2019 DE 102019211772
(43) Veröffentlichungstag der Anmeldung: 10.02.2021
(73) Patentinhaber: Siemens Aktiengesellschaft, 80333 München (DE)
(72) Erfinder: Hochmuth, Thomas, 93149 Nittenau (DE); Hüttinger, Robert, 94572 Schöfweg (DE); Martel, Jean-Mary, 93105 Tegernheim (DE); Rohrwild, Christian, 93057 Regensburg (DE); Schmid, Adolf, 93164 Laaber (DE); Seefeld, Volker, 93133 Burglengenfeld (DE)
(74) Vertreter: Siemens Patent Attorneys

(56) Entgegenhaltungen:
- WO-A1-2014/005615
- DE-A1- 102015 205 603
- DE-A1- 102017 101 194
- US-A1- 2014 028 287

## Beschreibung

Die Erfindung betrifft ein Sammelschienenhaltersystem zum Fixieren einer Sammelschiene in einem Niederspannungs-Installationsverteiler. Weiterhin betrifft die Erfindung einen Installationsverteiler mit einem derartigen Sammelschienenhaltersystem.

Elektrische Verteilsysteme können als Stromschienensysteme ausgebildet sein. Dabei sind die Stromschienen, welche auch als Leiterschienen oder Sammelschienen bezeichnet werden, in Richtung des Stromflusses langgestreckt als feste Leiter ausgebildet und können aus Kupfer, Aluminium oder ähnlich leitenden Materialien gefertigt sein. Stromschienensysteme werden zum Transport und zur Verteilung elektrischer Energie eingesetzt. Typische Aufgaben eines Stromschienensystems sind beispielsweise die Verbindung von einem Transformator über einen Hauptverteiler zum Unterverteiler oder die Versorgung von Großverbrauchern.
die Stromschienen eines Stromschienensystems sind dabei typischerweise in einem Schienenkasten - beispielsweise einem Verteilerkasten - untergebracht. Der Schienenkasten dient dem mechanischen Schutz und dem Zusammenhalt der Komponenten des Stromschienensystems. Er verhindert, dass ein unerwünschter elektrischer Kontakt zwischen Stromschienen und Umgebung stattfinden kann. Der Schienenkasten kann dabei so dimensioniert sein, dass zum einen die Abstände zur Verhinderung eines unerwünschten elektrischen Kontakts gewahrt sind, und zum anderen die Stromschienen innerhalb des Schienenkastens durch natürliche oder erzwungene Konvektion gekühlt werden.

Insbesondere vor dem Hintergrund einer immer dezentraler werdenden Energieversorgung sowie dem damit einhergehenden Aufbau sogenannter intelligenter Stromnetze wird es immer wichtiger, auch in der Niederspannungsverteilung einen genauen Überblick über den aktuellen Zustand der Stromnetze sowie der verschiedenen Verteilerknoten zu erhalten. In der Niederspannungsverteilung werden zu diesem Zweck aktuell zusätzliche Messgeräte und Kommunikationsmodule eingesetzt, jedoch benötigen diese Geräte zusätzlichen Platz, der jedoch in den zumeist räumlich stark limitierten Verteilerkästen - insbesondere bei Bestandsanlagen - nicht immer im benötigten Umfang vorhanden ist, so dass ein Nachrüsten mit den entsprechenden Komponenten in der Regel nicht - oder nur mit entsprechend großem Aufwand - möglich ist.

Aus der Druckschrift US 2014/0028287 A1 ist ein Stromwandler mit einer Strommesseinrichtung sowie einer Kommunikationseinrichtung bekannt, in den mehrere Sammelschienen eingesteckt werden können. Weiterhin ist aus der Offenlegungsschrift DE 10 2015 205 603 A1 eine mit Sammelschienen kontaktierbare Verbindungsvorrichtung bekannt, welche drei Anschlussklemmen sowie einen Stromsensor aufweist, der dazu dient, elektrische Ströme in den Anschlussklemmen zu messen. Ferner ist aus der Druckschrift WO 2014/005615 A1 ein Strommessgerät bekannt, welches auf einem dreiphasigen Sammelschienensystem montierbar ist.

Der Erfindung liegt daher die Aufgabe zugrunde, einen Sammelschienenhaltersystem sowie einen Niederspannungs-Installationsverteiler bereitzustellen, welche die vorstehend beschriebenen Nachteile zumindest teilweise überwinden.

Diese Aufgabe wird erfindungsgemäß durch das Sammelschienenhaltersystem sowie den Niederspannungs-Installationsverteiler gemäß den unabhängigen Ansprüchen gelöst. Vorteilhafte Ausgestaltungen des erfindungsgemäßen Sammelschienenhaltersystems sowie des erfindungsgemäßen Installationsverteilers sind Gegenstand der abhängigen Ansprüche.

Das erfindungsgemäße Sammelschienenhaltersystem zum Fixieren einer Sammelschiene in einem Niederspannungs-Installationsverteiler weist ein Gehäuse auf in das die Sammelschiene teilweise einführbar und dadurch aufgenommen und gehaltert ist. Weiterhin weist das Sammelschienenhaltersystem eine Messvorrichtung auf, welche in dem Gehäuse angeordnet ist und an die eine ebenfalls im Gehäuse angeordnete Strommesseinrichtung zur Messung eines durch die Sammelschiene fließenden elektrischen Stroms angeschlossen ist. Darüber hinaus weist das Sammelschienenhaltersystem eine Kommunikationseinrichtung auf, welche mit der Messvorrichtung verbunden ist, um von der Messvorrichtung ermittelte Messwerte an eine externe Empfangseinrichtung zu übertragen. Die Strommesseinrichtung ist dabei als Stromwandler mit einem Magnetkern und einer darum gewickelten Wandlerspule ausgebildet, wobei die Enden der Wandlerspule mit der Messvorrichtung elektrisch leitend verbunden sind. Das Sammelschienenhaltersystem ist dabei zweiteilig ausgebildet und weist ein Basisteil zur Befestigung des Sammelschienenhaltersystems im Installationsverteiler mit einer Aufnahme für die Sammelschiene sowie ein Abdeckteil, welches an dem Basisteil befestigbar ist, auf. Ferner ist auch der Magnetkern zweiteilig ausgebildet und weist ein Unterteil sowie ein Oberteil auf, die in montiertem Zustand miteinander verbunden sind. Das Unterteil ist dabei mit der Wandlerspule bewickelt und im Basisteil des Sammelschienenhaltersystems aufgenommen und gehaltert, während das Oberteil im Abdeckteil des Sammelschienenhaltersystems aufgenommen und gehaltert ist.

Mit Hilfe der mit der Messvorrichtung elektrisch verbundenen Strommesseinrichtung kann der in der Stromschiene fließende elektrische Strom jederzeit gemessen und mittels der ebenfalls mit der Messvorrichtung verbundenen Kommunikationseinrichtung an eine übergeordnete Leitstelle übermittelt werden. Auf diese Weise ist es möglich, jederzeit einen Überblick über den aktuellen Zustand einer Stromverteilung zu gewährleisten.

Die Verbindung der Kommunikationseinrichtung mit der Messvorrichtung kann dabei sowohl körperlich als auch drahtlos realisiert sein. Ebenso ist es möglich, die Messvorrichtung sowie die Kommunikationseinrichtung auf einer gemeinsamen Leiterplatte anzuordnen. Durch die Integration der Messvorrichtung sowie der Kommunikationseinrichtung in das erfindungsgemäßen Sammelschienenhaltersystem kann ferner das Platzproblem bei der Aus- und Nachrüstung von Installationsverteilern gelöst werden, da lediglich bereits bestehende Sammelschienenhaltersysteme durch erfindungsgemäße Sammelschienenhaltersysteme gleicher Baugröße ersetzt werden müssen: Bestandsanlagen können somit einfach durch Austausch des Sammelschienenhaltersystems umgerüstet werden, ohne dass hierzu ein zusätzlicher Platzbedarf für zusätzlich zu installierende Kommunikations- und Messgeräte erforderlich wäre. Darüber hinaus müssen auch keine zusätzlich zu installierenden Kommunikations- und Messgeräte aufwändig verdrahtet werden, was in einer zusätzlichen Kostenersparnis resultiert.

Ein Stromwandler, bestehend aus einem Magnetkern, der um die Leitung gelegt wird, deren Stromwert gemessen werden soll, sowie einer um den Magnetkern gewickelten Magnetspule, stellt eine mögliche Anordnung zur Strommessung dar. Physikalisch basiert ein Stromwandler, der auch als Messwandler bezeichnet wird, auf dem Induktionsprinzip. Die Art und Weise der Strommessung ist jedoch nicht erfindungswesentlich, daher sind prinzipiell auch alternative Strommesseinrichtungen, beispielsweise Hallsensoren, welche physikalisch auf dem Hall-Effekt basieren, im Sinne der Erfindung als Strommesseinrichtung verwendbar.

Um den Montagevorgang - insbesondere den Zugang ins Gehäuseinnere des Sammelschienenhaltersystems - zu erleichtern, kann eine zweiteilige Gestaltung des Sammelschienenhaltersystems hilfreich sein. Beispielsweise können die Sammelschienen in die am Basisteil ausgebildeten Aufnahmen für die Sammelschienen eingelegt und dort fixiert werden, beispielsweise durch Verschrauben. Das Fixieren der Sammelschienen kann aber auch durch das Befestigen des Abdeckteils am Basisteil erreicht werden. Das Abdeckteil fungiert ferner als Schutzelement, welches den Bereich der im Basisteil ausgebildeten Sammelschienenaufnahmen abdeckt. Durch eine zweiteilige Gestaltung des Magnetkerns wird die Montage insbesondere bei der Nachrüstung bestehender Anlagen deutlich vereinfacht, da die Sammelschiene nicht mehr durch den Stromwandler hindurchgeführt werden muss, sondern dieser einfach auf die bereits montierte Sammelschiene aufgesteckt werden kann.

In einer vorteilhaften Weiterbildung ist das Gehäuse des Sammelschienenhaltersystems einteilig ausgebildet. Auf diese Weise wird die Anzahl der zur Montage des Sammelschienenhaltersystems benötigten Bauteile reduziert.

In einer weiteren vorteilhaften Weiterbildung des Sammelschienenhaltersystems weist das Gehäuse mehrere Aufnahmen zur Fixierung mehrerer Sammelschienen auf. An die Messvorrichtung sind dabei mehrere Strommesseinrichtungen angeschlossen, wobei jeder der mehreren Sammelschienen jeweils eine der Strommesseinrichtungen eindeutig zugeordnet ist.

Falls mehrere Stromschienen in einer Einheit, beispielsweise einem Verteilerkasten, verbaut sind, so ist es sinnvoll, für jede der Stromschienen auch eine eigene Strommesseinrichtung bereitzustellen, um den elektrischen Stromfluss bezogen auf die jeweilige Stromschiene individuell zu erfassen. Bei einem zweiphasigen System werden dementsprechend zwei Stromschienen mit je einer eigenen Strommesseinrichtung verwendet, bei einem dreiphasigen System folglich drei, und bei einem dreiphasigen System mit Neutralleiter dementsprechend vier Stromschienen. Somit kann ein exakter Überblick über den aktuellen Zustand aller Stromkreise eines Verteilnetzes gewährleistet werden.

In einer weiteren vorteilhaften Weiterbildung des Sammelschienenhaltersystems weist die Messvorrichtung eine Spannungsmesseinrichtung zur Messung einer elektrischen Spannung auf.

Mit Hilfe der Spannungsmesseinrichtung wird durch Differenzbildung das elektrische Potential der Leitschiene bestimmt. In Verbindung mit dem dieser Leitschiene zugeordneten Strommesswert sind daraus Informationen zur elektrischen Energie bzw. zur elektrischen Leistung des dieser Leitschiene zugeordneten elektrischen Stromkreises möglich.

In einer weiteren vorteilhaften Weiterbildung des Sammelschienenhaltersystems weist die Messvorrichtung ferner eine Verarbeitungseinrichtung zur Verarbeitung der Messwerte auf.

Mit Hilfe der Verarbeitungseinrichtung ist es möglich, die gemessenen Messwerte zu verarbeiten, beispielsweise zu Durchschnitts-, Energie oder Leistungswerten, und anstelle der Rohdaten der Messwerte die verarbeiteten Werte/Daten an die externe Empfangseinrichtung zu übertragen. Selbstverständlich ist es ebenso möglich, sowohl die reinen Messwerte als auch die daraus verarbeiteten Daten an die externe Empfangseinrichtung weiterzuleiten.

In einer weiteren vorteilhaften Weiterbildung weist das Sammelschienenhaltersystem eine Energieversorgungseinrichtung für die Messvorrichtung sowie die Kommunikationseinrichtung auf, wobei die für die Messvorrichtung sowie die Kommunikationseinrichtung benötigte elektrische Energie mittels elektromagnetischer Induktion aus dem zu messenden Laststrom erzeugt wird.

Auf diese Weise ist keine externe Energieversorgung wie beispielsweise eine Batterie oder ein eigenes Netzteil zur Energieversorgung der Messvorrichtung sowie der Kommunikationseinrichtung erforderlich. Insbesondere kann - sofern eine der Strommesseinrichtungen als Stromwandler ausgebildet ist - einer dieser bereits bestehenden Stromwandler für die Energieversorgungseinrichtung verwendet werden. Der betreffende Stromwandler kann dann zeitlich getaktet entweder zur Strommessung oder zur Energieversorgung genutzt werden, wobei die im Energieversorgungsmodus gewonnene elektrische Energie vorteilhafter Weise in einem Akkumulator oder Kondensator gespeichert wird, um zeitliche Ausfälle bei der Energieversorgung zu überbrücken - sei es, weil der Stromwandler gerade im Messmodus betrieben wird, oder weil die betreffende Stromschiene gerade nicht bestromt ist.

In einer weiteren vorteilhaften Weiterbildung des Sammelschienenhaltersystems erfolgt die Datenübertragung von der Kommunikationseinrichtung an die externe Empfangseinrichtung drahtlos.

Durch die drahtlose Verbindung zwischen der in dem Sammelschienenhaltersystem integrierten Kommunikationseinrichtung und der externe Empfangseinrichtung kann der Verdrahtungsaufwand zwischen diesen beiden Komponenten entfallen. Der Montageaufwand wird dadurch weiter reduziert. Die externe Empfangseinrichtung ist dabei vorteilhafter Weise ebenfalls im Verteiler angeordnet. Für eine derartige Datenübertragung im Nahbereich kommen beispielsweise Übertragungsverfahren wie WLAN, Bluetooth oder ZigBee in Betracht.

Der erfindungsgemäße Niederspannungs-Installationsverteiler weist ein Gehäuse sowie zumindest ein Sammelschienenhaltersystem der vorstehend beschriebenen Art, welcher in dem Gehäuse befestigt ist, auf. Weiterhin weist der Installationsverteiler zumindest einer Sammelschiene auf, welche in das Sammelschienenhaltersystem teilweise eingeführt und dadurch aufgenommen und gehaltert ist. Dabei ist der Stromfluss in der Sammelschiene mittels der in das Sammelschienenhaltersystem integrierten Messvorrichtung messbar. Ferner weist der Installationsverteiler eine Empfangseinrichtung zum Empfangen der von der Messvorrichtung ermittelten und mittels der Kommunikationseinrichtung übermittelten Messwerte auf.

Mit Hilfe des erfindungsgemäßen Installationsverteilers ist eine platzsparende Anordnung der zusätzlichen Messgeräte sowie des Kommunikationsmoduls möglich. Die Verwendung des erfindungsgemäßen Sammelschienenhaltersystems erlaubt es, den aktuellen Zustand von Stromnetzen und Verteilerknoten zu messen und zeitnah zu verarbeiten, wodurch eine detaillierte Überwachung des Stromnetzes auch in der Niederspannungsverteilung realisierbar ist. Hinsichtlich der Vorteile des erfindungsgemäßen Sammelschienenhaltersystems wird auf die vorstehenden Ausführungen verwiesen.

In einer weiteren vorteilhaften Weiterbildung des Installationsverteiler ist die Empfangseinrichtung mit einer übergeordneten Leitstelle gekoppelt, um die von der Kommunikationseinrichtung empfangenen Messwerte an die Leitstelle weiterzuleiten.

Die informative Kopplung der Empfangseinrichtung mit der Leitstelle kann dabei drahtlos oder kabelgebunden realisiert sein. Neben den Messwert-Rohdaten können dabei selbstverständlich auch bereits vorverarbeitete Daten - beispielsweise Durchschnittswerte oder Energie- und Leistungsdaten von der Empfangseinrichtung an die Leitstelle gesendet werden.

Im Folgenden werden Ausführungsbeispiele des Sammelschienenhaltersystems sowie des Niederspannungs-Installationsverteilers unter Bezug auf die beigefügten Figuren näher erläutert. In den Figuren sind:
Figuren
- 1 und 2: schematische Darstellungen eines aus dem Stand der Technik vorbekannten Installationsverteilers sowie eines vorbekannten Sammelschienenhaltersystems; Figuren
- 3 und 4: schematische Darstellungen eines erfindungsgemäßen Sammelschienenhaltersystems;

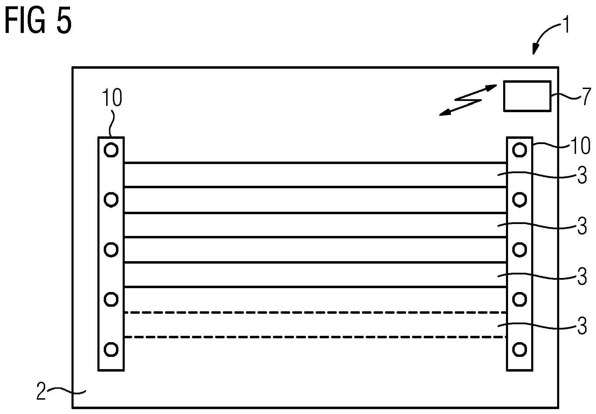

- Figur 5: eine schematische Darstellung eines erfindungsgemäßen Installationsverteilers.

In den verschiedenen Figuren der Zeichnung sind gleiche Teile stets mit dem gleichen Bezugszeichen versehen. Die Beschreibung gilt für alle Zeichnungsfiguren, in denen das entsprechende Teil ebenfalls zu erkennen ist.

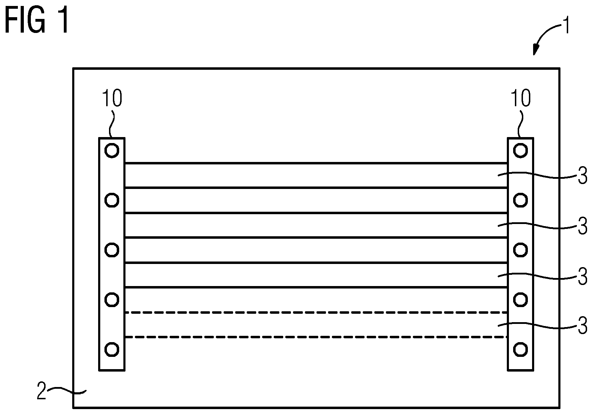

In Figur 1 ist ein aus dem Stand der Technik vorbekannter Niederspannungs-Installationsverteiler 1, in dem zwei ebenfalls vorbekannte Sammelschienenhaltersysteme 10 angeordnet sind, schematisch dargestellt. Die Sammelschienenhaltersysteme 10 sind in einem Gehäuse 2 des Installationsverteilers 1 befestigt, d.h. aufgenommen und gehaltert, und dienen dazu, eine oder mehrere Sammelschienen 3 ortsfest im Installationsverteiler 1 zu fixieren. Je nach Anzahl der zu fixierenden Sammelschienen 3 weist das Sammelschienenhaltersystem 10 hierzu eine entsprechende Anzahl an Einstecköffnungen auf, in die die Sammelschienen 3 eingesteckt sind. Im Inneren des Sammelschienenhaltersystems 10 sind die Sammelschienen 3 jeweils mit einem ihnen zugeordneten Anschlussleiter elektrisch leitend verbunden. In der Darstellung der Figur 1 sind die Sammelschienenhaltersysteme 10 zur Aufnahme von vier Sammelschienen 3 ausgebildet: dabei dienen die oberen drei Sammelschienen 3 zur Kontaktierung mit jeweils einer der drei Phasen einer dreiphasigen Stromverteilung, die untere (gestrichelt dargestellte) Sammelschiene 3 dient der Kontaktierung mit dem Neutralleiter der dreiphasigen Stromverteilung.

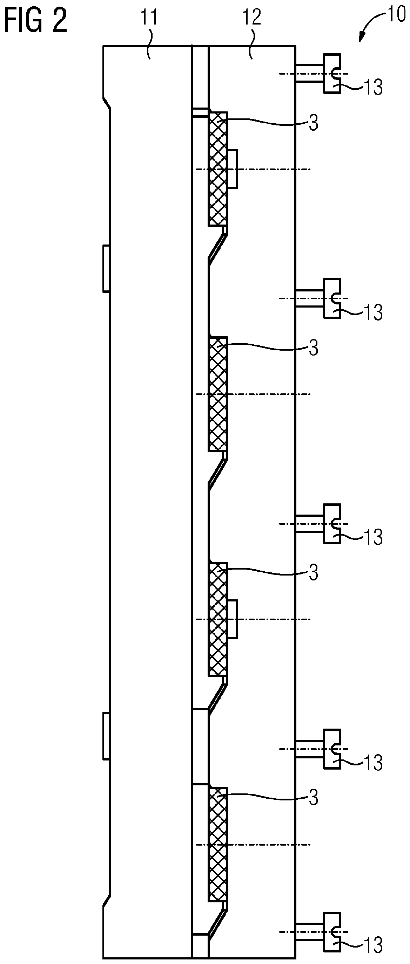

In Figur 2 ist das in Figur 1 dargestellte und aus dem Stand der Technik bereits vorbekannte Sammelschienenhaltersystem 10 in einer Querschnittsdarstellung gezeigt. Das Sammelschienenhaltersystem 10 weist ein zweiteiliges Gehäuse mit einem Basisteil 11 sowie einem Abdeckteil 12, welches fest, aber lösbar mit dem Basisteil 11 verbunden ist, auf. Das Basisteil 11 dient dabei sowohl zur Befestigung des Sammelschienenhaltersystems 10 in dem Installationsverteiler 1 als auch zur Aufnahme der Sammelschienen 3. Durch Befestigen des Abdeckteils 12 am Basisteil 11 sind die Sammelschienen 3 hinsichtlich ihrer räumlichen Lage fixiert als auch vor unbeabsichtigter Berührung geschützt. In Figur 2 ist die Befestigung des Abdeckteils 12 am Basisteil 11 durch Verwendung mehrere Schrauben 13 schematisch dargestellt. Dies ist jedoch nicht zwingend; vielmehr sind auch andere, für diesen Zweck geeignete Verbindungsmittel einsetzbar. Darüber hinaus sei angemerkt, dass prinzipiell auch Sammelschienenhaltersysteme 10 mit einteiligem Gehäuse, in das die Sammelschienen 3 eingesteckt werden, einsetzbar sind.

Hinsichtlich der Anzahl der Sammelschienen sind die Darstellungen der Figuren 1 und 2 lediglich beispielhaft zu verstehen: selbstverständlich umfasst die Erfindung auch einpolige, zweipolige oder dreipolige Anordnungen mit einer entsprechenden Anzahl an Sammelschienen 3 sowie einem entsprechend gestalteten oder bestückten Sammelschienenhaltersystem 10.

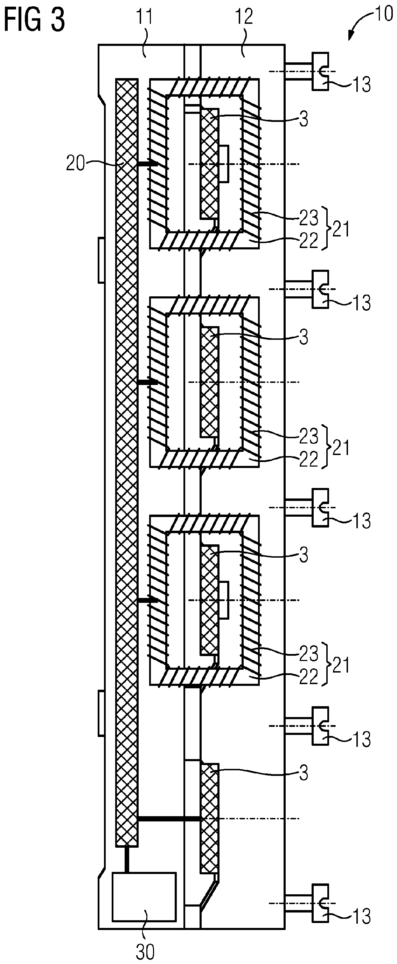

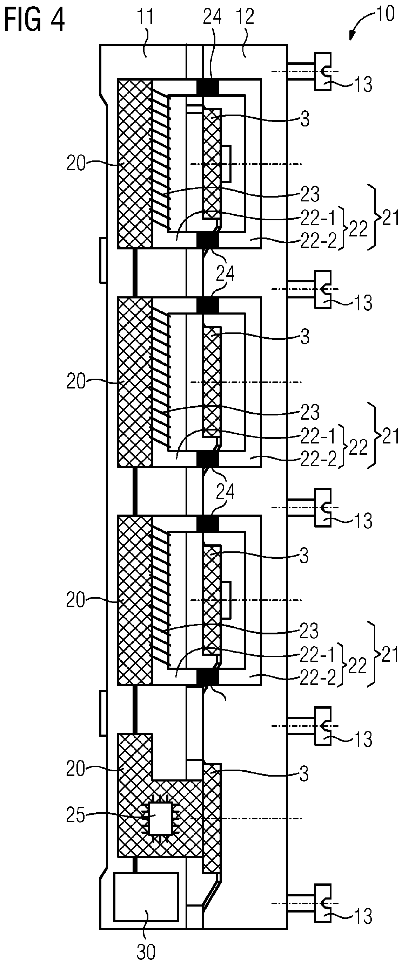

Die Figuren 3 und 4 zeigen schematisch mögliche Ausführungsbeispiele eines erfindungsgemäßen Sammelschienenhaltersystems 10. Beispielhaft ist dabei eine vierpolige Ausführung dargestellt, bei der die unterste Sammelschiene 3 zum Anschluss eines Neutralleiters (nicht dargestellt), und die oberen drei Sammelschienen 3 zum Anschluss der drei Phasenleiter (nicht dargestellt) einer dreiphasigen Stromverteilung dienen.

In beiden Ausführungsbeispielen ist das Sammelschienenhaltersystem 10 zweiteilig gestaltet und weist ein Basisteil 11 sowie ein mit dem Basisteil 11 verbindbares Abdeckteil 12 auf. Das Basisteil 11 dient zum einen der Befestigung des Sammelschienenhaltersystems 10 im Installationsverteiler 1. Zum anderen sind am Basisteil 11 Aufnahmen zur Halterung der Sammelschienen 3 ausgebildet. Mit Hilfe mehrerer Schrauben 13 ist das Abdeckteil 12 am Basisteil 11 befestigbar, wodurch auch die Sammelschienen 3 in ihrer Position fixiert werden. Dies ist jedoch nicht zwingend erforderlich: es kommen sowohl andere Möglichkeiten zur Befestigung der Sammelschienen 3 am Basisteil 11, als auch zur Befestigung des Abdeckteils 12 am Basisteil 11 in Betracht. Die dargestellte Ausführungsform hat jedoch den Vorteil, dass mit der Befestigung des Abdeckteils 12 am Basisteil 11 auch die Sammelschienen 3 fixiert sind, wodurch nur eine Art der Befestigung für beide Zwecke erforderlich ist.

Im Inneren des Sammelschienenhaltersystems 10 ist erfindungsgemäß eine Messvorrichtung 20 - die in den Figuren 3 und 4 beispielhaft als Leiterplatte dargestellt ist - angeordnet. Die Messvorrichtung 20 weist für jede der drei oberen Sammelschienen 3, welche den Phasenleitern der dreiphasigen Stromverteilung zugeordnet sind, eine eigene Strommesseinrichtung 21 auf, welche an die Leiterplatte angeschlossen ist. Jede der Strommesseinrichtungen 21 dient dabei dazu, den in der ihr jeweils zugeordneten Sammelschiene 3 fließenden elektrischen Strom zu messen. In den Darstellungen der Figuren 3 und 4 sind die Strommesseinrichtungen 21 allesamt als Stromwandler 21 ausgebildet, welcher jeweils einen Magnetkern 22 aufweist, der jeweils mit einer Wandlerspule 23 umwickelt ist. Die Enden der Wandlerspule 23 sind dabei jeweils direkt oder indirekt mit der Messvorrichtung 20 elektrisch leitend verbunden.

Weiterhin weist das erfindungsgemäße Sammelschienenhaltersystem 10 eine Kommunikationseinrichtung 30 auf, welche mit der Messvorrichtung 20 verbunden ist, um die von der Messvorrichtung 20 mit Hilfe der Strommesseinrichtungen 21 generierten Messwerte an eine externe Empfangseinrichtung 7 (siehe Fig.5) zu übertragen, um jederzeit einen aktuellen Überblick über den Ist-Zustand der Stromverteilung bereitstellen zu können.

Die Kommunikationseinrichtung 30 kann dabei entweder kabelgebunden oder drahtlos mit der Messvorrichtung 20 verbunden sein. Ebenso ist es möglich, die Kommunikationseinrichtung 30 mit der Messvorrichtung 20 auf einer gemeinsamen Leiterplatte anzuordnen.

Darüber hinaus kann die Messvorrichtung 20 eine Spannungsmesseinrichtung zur Messung einer elektrischen Spannung - beispielsweise zwischen zwei Phasenleitungen oder zwischen einer der Phasenleitungen und dem Neutralleiter - aufweisen. In Verbindung mit dem der ermittelten Strommesswert der der jeweiligen Phasenleitung zugeordneten Stromschiene 3 kann daraus eine Aussage zur elektrischen Energie bzw. zur elektrischen Leistung des dieser Leitschiene zugeordneten elektrischen Stromkreises getroffen werden.

Ferner kann die Messvorrichtung 20 - wie in dem Ausführungsbeispiel gemäß Figur 4 schematisch dargestellt - eine Verarbeitungseinrichtung 25 zur Verarbeitung oder Vorverarbeitung der mittels der Strommesseinrichtungen 21 generierten Messwerte umfassen. Beispielsweise können aus den Rohdaten der Messwerte Durchschnittswerte über die Zeit oder - bei Vorliegen der jeweiligen Spannungsmesswerte - Energie oder Leistungsdaten ermittelt und mit Hilfe der Kommunikationseinrichtung 30 an die externe Empfangseinrichtung 7 weitergeleitet werden.

Das Ausführungsbeispiel gemäß Figur 4 unterscheidet sich vom Ausführungsbeispiel gemäß Figur 3 im Wesentlichen im Aufbau des Stromwandlers 21. Dieser weist gemäß Figur 4 einen zweiteiligen Magnetkern 22 mit einem Unterteil 22-1 sowie einem Oberteil 22-1 auf. Das Unterteil 22-1 ist dabei mit der Wandlerspule 23 bewickelt und im Basisteil 11 des Sammelschienenhaltersystems 10 aufgenommen und gehaltert, wohingegen das Oberteil 22-2 im Abdeckteil 12 des Sammelschienenhaltersystems 10 aufgenommen und gehaltert ist. Im montierten Zustand sind Unterteil 22-1 und Oberteil 22-2 über Kontaktstellen 24 miteinander verbunden, so dass ein magnetischer Kreis gebildet ist. Aufgrund dieser konstruktiven Gestaltung des Stromwandlers 21 kann der Montageaufwand - insbesondere bei einer Nachrüstung bestehender Anlagen - deutlich vereinfacht werden.

In Figur 5 ist der erfindungsgemäße Installationsverteiler 1 schematisch dargestellt. Dieser weist ein Gehäuse 2 auf, in dem zwei Sammelschienenhaltersysteme 10, von denen zumindest einer als erfindungsgemäßes Sammelschienenhaltersystem 10 ausgebildet ist, befestigt sind. Mit Hilfe der beiden Sammelschienenhaltersysteme 10 sind insgesamt vier Sammelschienen 3 in dem Gehäuse 2 befestigt. Weiterhin ist in dem Gehäuse 2 des Installationsverteilers 1 die Empfangseinrichtung 7, welche dazu dient, die von der Kommunikationseinrichtung 30 gesendeten Daten zu empfangen, angeordnet. Da die sowohl die im Sammelschienenhaltersystem 10 angeordnete Kommunikationseinrichtung 30 als auch die Empfangseinrichtung 7 in dem Installationsverteiler 1 angeordnet sind, kann zur Datenübertragung ein Übertragungsverfahren für kurze Reichweiten wie Bluetooth oder ZigBee verwendet werden. Darüber hinaus wäre eine drahtgebundene Datenübertragung zwischen der Kommunikationseinrichtung 30 und der Empfangseinrichtung 7 prinzipiell ebenso möglich, beispielsweise aufgrund höherer Sicherheitsanforderungen. Dies geht allerdings mit einem höheren Verdrahtungsaufwand einher und dürfte daher nur für spezielle Anwendungen eine geeignete Alternative sein.

Die Empfangseinrichtung 7 kann als Datensammler ausgebildet sein, welcher auf Anforderung oder in regelmäßigen Abständen die gespeicherten Daten vollständig oder teilweise an eine übergeordnete Stelle, beispielsweise eine Leitstelle oder Leitwarte (nicht dargestellt), übermittelt. Diese Datenübertragung kann wiederum sowohl kabelgebunden oder drahtlos, beispielsweise über WLAN, realisiert sein. Dies ist nicht erfindungswesentlich. Auf diese Weise ist es möglich, von unterschiedlichen Orten aus und jederzeit einen detaillierten Überblick über den aktuellen Zustand der Stromverteilung zu gewährleisten.

### Bezugszeichenliste

- 1: Installationsverteiler
- 2: Gehäuse
- 3: Sammelschiene

- 7: Empfangseinrichtung

- 10: Sammelschienenhaltersystem
- 11: Basisteil
- 12: Abdeckteil
- 13: Schraube

- 20: Messvorrichtung
- 21: Strommesseinrichtung / Stromwandler
- 22: Magnetkern
22-1 Unterteil
22-2 Oberteil
- 23: Wandlerspule
- 24: Kontaktstelle
- 25: Verarbeitungseinrichtung

- 30: Kommunikationseinrichtung

## Patentansprüche

1. Sammelschienenhaltersystem (10) zum Fixieren einer Sammelschiene (3) in einem Niederspannungs-Installationsverteiler (1),
- mit einem Gehäuse, in das die Sammelschiene (3) teilweise einführbar und dadurch aufgenommen und gehaltert ist,
- mit einer Messvorrichtung (20), welche in dem Gehäuse angeordnet ist und an die eine ebenfalls im Gehäuse angeordnete Strommesseinrichtung (21) zur Messung eines durch die Sammelschiene (3) fließenden elektrischen Stroms angeschlossen ist, sowie
- mit einer Kommunikationseinrichtung (30), welche mit der Messvorrichtung (20) verbunden ist, um von der Messvorrichtung (20) ermittelte Messwerte an eine externe Empfangseinrichtung (7) zu übertragen,
- wobei die Strommesseinrichtung (21) als Stromwandler mit einem Magnetkern (22) und einer darum gewickelten Wandlerspule (23) ausgebildet ist, wobei die Enden der Wandlerspule (23) mit der Messvorrichtung (20) elektrisch leitend verbunden sind,
- wobei das Sammelschienenhaltersystem (10) zweiteilig ausgebildet ist, mit einem Basisteil (11) zur Befestigung des Sammelschienenhaltersystems (10) im Installationsverteiler (1), wobei das Basisteil (11) eine Aufnahme für die Sammelschiene (3) aufweist, sowie mit einem Abdeckteil (12), welches an dem Basisteil (11) befestigbar ist, **dadurch gekennzeichnet,**
- **dass** der Magnetkern (22) zweiteilig ausgebildet ist und ein Unterteil (22-1) sowie ein Oberteil (22-2) aufweist, die in montiertem Zustand miteinander verbunden sind, wobei das Unterteil (22-1) mit der Wandlerspule (23) bewickelt ist und im Basisteil (11) des Sammelschienenhaltersystems (10) aufgenommen und gehaltert ist, während das Oberteil (22-2) im Abdeckteil (12) des Sammelschienenhaltersystems (10) aufgenommen und gehaltert ist.

2. Sammelschienenhaltersystem (10) nach Anspruch 1,
**dadurch gekennzeichnet,**
**dass** das Gehäuse einteilig ausgebildet ist.

3. Sammelschienenhaltersystem (10) nach einem der vorherigen Ansprüche,
**dadurch gekennzeichnet,**
- **dass** das Gehäuse mehrere Aufnahmen zur Fixierung mehrerer Sammelschienen (3) aufweist,
- **dass** an die Messvorrichtung (20) mehrere Strommesseinrichtungen (21) angeschlossen sind, wobei jeder der mehreren Sammelschienen (3) jeweils eine der Strommesseinrichtungen (21) eindeutig zugeordnet ist.

4. Sammelschienenhaltersystem (10) nach einem der vorherigen Ansprüche, **dadurch gekennzeichnet, dass** die Messvorrichtung (20) eine Spannungsmesseinrichtung zur Messung einer elektrischen Spannung aufweist.

5. Sammelschienenhaltersystem (10) nach einem der vorherigen Ansprüche, **dadurch gekennzeichnet, dass** die Messvorrichtung (20) ferner eine Verarbeitungseinrichtung (25) zur Verarbeitung der Messwerte aufweist.

6. Sammelschienenhaltersystem (10) nach einem der vorherigen Ansprüche, **gekennzeichnet durch** eine Energieversorgungseinrichtung für die Messvorrichtung (20) sowie die Kommunikationseinrichtung (30), wobei die hierfür benötigte elektrische Energie mittels elektromagnetischer Induktion aus dem zu messenden Laststrom erzeugt wird.

7. Sammelschienenhaltersystem nach einem der vorherigen Ansprüche,
**dadurch gekennzeichnet,**
**dass** die Datenübertragung von der Kommunikationseinrichtung (30) an die externe Empfangseinrichtung (7) drahtlos erfolgt.

8. Niederspannungs-Installationsverteiler (1),
- mit einem Gehäuse (2),
- mit zumindest einem Sammelschienenhaltersystem (10) nach einem der Ansprüche 1 bis 5, welcher in dem Gehäuse (2) befestigt ist,
- mit zumindest einer Sammelschiene (3), welche in den Sammelschienenhaltersystem (10) teilweise eingeführt und dadurch aufgenommen und gehaltert ist, wobei der Stromfluss in der Sammelschiene (3) mittels der in den Sammelschienenhaltersystem (10) integrierten Messvorrichtung (20) messbar ist, und
- mit einer Empfangseinrichtung (7) zum Empfangen der von der Messvorrichtung (20) ermittelten und mittels der Kommunikationseinrichtung (30) übermittelten Messwerte.

9. Niederspannungs-Installationsverteiler (1) nach Anspruch 8, wobei die Empfangseinrichtung (7) mit einer übergeordneten Leitstelle gekoppelt ist, um die von der Kommunikationseinrichtung (30) empfangenen Messwerte an die Leitstelle weiterzuleiten.

## Claims

1. Busbar holder system (10) for fixing a busbar (3) in a low-voltage distribution board (1),
- comprising a housing into which the busbar (3) is able to be partly introduced, and thereby received and held,
- comprising a measuring device (20) that is arranged in the housing and to which a current measuring apparatus (21), which is also arranged in the housing, is connected so as to measure an electric current flowing through the busbar (3), and
- comprising a communication apparatus (30) that is connected to the measuring device (20) in order to transmit measured values ascertained by the measuring device (20) to an external receiving apparatus (7),
- wherein the current measuring apparatus (21) is in the form of a current transformer with a magnetic core (22) and a transformer coil (23) that is wound around said magnetic core, wherein the ends of the transformer coil (23) are electrically conductively connected to the measuring device (20),
- wherein the busbar holder system (10) is formed in two parts, comprising a base part (11) for fastening the busbar holder system (10) in the distribution board (1), wherein the base part (11) has a receptacle for the busbar (3), and comprising a cover part (12) that is able to be fastened to the base part (11), **characterized**
- **in that** the magnetic core (22) is formed in two parts and has a lower part (22-1) and an upper part (22-2) that are connected to one another in the mounted state, wherein the lower part (22-1) is wound with the transformer coil (23) and is received and held in the base part (11) of the busbar holder system (10), whereas the upper part (22-2) is received and held in the cover part (12) of the busbar holder system (10).

2. Busbar holder system (10) according to Claim 1, **characterized**
**in that** the housing is formed in one part.

3. Busbar holder system (10) according to either of the preceding claims,
**characterized**
- **in that** the housing has a plurality of receptacles for fixing a plurality of busbars (3),
- **in that** a plurality of current measuring apparatuses (21) are connected to the measuring device (20), wherein in each case one of the current measuring apparatuses (21) is uniquely assigned to each of the plurality of busbars (3).

4. Busbar holder system (10) according to one of the preceding claims, **characterized**
**in that** the measuring device (20) has a voltage measuring apparatus for measuring an electrical voltage.

5. Busbar holder system (10) according to one of the preceding claims, **characterized**
**in that** the measuring device (20) also has a processing apparatus (25) for processing the measured values.

6. Busbar holder system (10) according to one of the preceding claims, **characterized by**
an energy supply apparatus for the measuring device (20) and the communication apparatus (30), wherein the electrical energy required for this purpose is generated by means of electromagnetic induction from the load current to be measured.

7. Busbar holder system according to one of the preceding claims,
**characterized**
**in that** the data is transmitted wirelessly from the communication apparatus (30) to the external receiving apparatus (7).

8. Low-voltage distribution board (1),
- comprising a housing (2),
- comprising at least one busbar holder system (10) according to one of Claims 1 to 5, which is fastened in the housing (2),
- comprising at least one busbar (3) that is partly introduced into the busbar holder system (10), and thereby received and held, wherein the flow of current in the busbar (3) is able to be measured by means of the measuring device (20) integrated into the busbar holder system (10), and
- comprising a receiving apparatus (7) for receiving the measured values ascertained by the measuring device (20) and transmitted by means of the communication apparatus (30).

9. Low-voltage distribution board (1) according to Claim 8, wherein the receiving apparatus (7) is coupled to a superordinate control centre in order to forward the measured values received from the communication apparatus (30) to the control centre.

## Revendications

1. Système de support de barre omnibus (10) permettant d'immobiliser une barre omnibus (3) dans un répartiteur d'installation basse tension (1),
- avec un boîtier dans lequel la barre omnibus (3) peut être partiellement introduite et être ainsi accueillie et retenue,
- avec un dispositif de mesure (20) agencé dans le boîtier et auquel est raccordé un dispositif de mesure de courant (21) qui est également agencé dans le boîtier et permet de mesurer un courant électrique circulant à travers la barre collectrice (3), et
- avec un dispositif de communication (30) relié au dispositif de mesure (20) afin de transmettre à un dispositif de réception externe (7) des valeurs de mesure déterminées par le dispositif de mesure (20),
- dans lequel le dispositif de mesure de courant (21) est conçu comme un transformateur de courant avec un noyau magnétique (22) et une bobine de convertisseur (23) enroulée autour de celui-ci, dans lequel les extrémités de la bobine de convertisseur (23) sont reliées de manière électriquement conductrice au dispositif de mesure (20),
- dans lequel le système de support de barre omnibus (10) est réalisé en deux parties, avec une partie de base (11) permettant de fixer le système de support de barre omnibus (10) dans le répartiteur d'installation (1), dans lequel la partie de base (11) présente un logement pour la barre omnibus (3), et avec une partie couvercle (12) pouvant être fixée à la partie de base (11), **caractérisé en ce que**
- le noyau magnétique (22) est réalisé en deux parties et présente une partie inférieure (22-1) et une partie supérieure (22-2) qui sont reliées entre elles à l'état monté, dans lequel la partie inférieure (22-1) est entourée par les enroulements de la bobine de transducteur (23) et est accueillie et retenue dans la partie de base (11) du système de support de barre omnibus (10), tandis que la partie supérieure (22-2) est accueillie et retenue dans la partie couvercle (12) du système de support de barre omnibus (10).

2. Système de support de barre omnibus (10) selon la revendication 1,
**caractérisé en ce que**
le boîtier est réalisé en une seule pièce.

3. Système de support de barre omnibus (10) selon l'une quelconque des revendications précédentes,
**caractérisé en ce que**
- le boîtier présente plusieurs logements permettant d'immobiliser plusieurs barres omnibus (3),
- plusieurs dispositifs de mesure de courant (21) sont raccordés au dispositif de mesure (20), dans lequel respectivement un des dispositifs de mesure de courant (21) est associé de manière univoque à chacune des plusieurs barres omnibus (3).

4. Système de support de barre omnibus (10) selon l'une quelconque des revendications précédentes, **caractérisé en ce que** le dispositif de mesure (20) présente un dispositif de mesure de tension permettant de mesurer une tension électrique.

5. Système de support de barre omnibus (10) selon l'une quelconque des revendications précédentes, **caractérisé en ce que** le dispositif de mesure (20) présente en outre un dispositif de traitement (25) permettant de traiter les valeurs de mesure.

6. Système de support de barre omnibus (10) selon l'une quelconque des revendications précédentes, **caractérisé par** un dispositif d'alimentation en énergie destiné au dispositif de mesure (20) et au dispositif de communication (30), dans lequel l'énergie électrique nécessaire pour cela est générée par induction électromagnétique à partir du courant de charge à mesurer.

7. Système de support de barres omnibus selon l'une des revendications précédentes,
**caractérisé en ce que**
la transmission de données depuis le dispositif de communication (30) vers le dispositif de réception externe (7) s'effectue sans fil.

8. Répartiteur d'installation basse tension (1),
- avec un boîtier (2),
- avec au moins un système de support de barre omnibus (10) selon l'une quelconque des revendications 1 à 5 qui est fixé dans le boîtier (2),
- avec au moins une barre omnibus (3) qui est en partie introduite dans le système de support de barre omnibus (10) et est ainsi accueillie et retenue, dans lequel le flux de courant dans la barre omnibus (3) peut être mesuré au moyen du dispositif de mesure (20) intégré dans le système de support de barre omnibus (10), et
- avec un dispositif de réception (7) permettant de recevoir les valeurs de mesure déterminées par le dispositif de mesure (20) et transmises au moyen du dispositif de communication (30).

9. Répartiteur d'installation basse tension (1) selon la revendication 8, dans lequel le dispositif de réception (7) est couplé à un poste de contrôle de niveau supérieur afin de rediriger les valeurs de mesure reçues du dispositif de communication (30) vers le centre de contrôle.
